Europäisches Patentamt

European Patent Office

Office européen des brevets

(11) Veröffentlichungsnummer: **0 589 287 A2**

## (12) EUROPÄISCHE PATENTANMELDUNG

(21) Anmeldenummer: **93114438.0**

(22) Anmeldetag: **08.09.93**

(51) Int. Cl.5: **H02J 7/10, G01R 29/24**

(30) Priorität: **22.09.92 DE 4231732**

(43) Veröffentlichungstag der Anmeldung:
**30.03.94 Patentblatt 94/13**

(84) Benannte Vertragsstaaten:
**AT CH FR IT LI**

(71) Anmelder: **MENTZER ELECTRONIC GmbH**
**Hohe Strasse 3**
**D-61231 Bad Nauheim(DE)**

(72) Erfinder: **Retzlaff, Werner**
**Am Herrengarten 22**
**D-61169 Friedberg(DE)**

(74) Vertreter: **Behn, Klaus, Dipl.-Ing.**
**Patentanwalt**
**Lindenberg 34**
**D-82343 Pöcking (DE)**

(54) **Verfahren zum Laden einer mehrzelligen Batterie.**

(57) Verfahren zum Laden einer mehrzelligen Batterie unter Verwendung eines Batterieladegerätes und einer eine potentialfreie Nachladeeinrichtung enthaltenden microcontroller-gesteuerten Einrichtung zur Analyse und Optimierung des Ladezustandes einer mehrzelligen Batterie mit einer Einrichtung zur schaltbaren Verbindung auswählbarer Klemmenspannungen von Teilbatterien oder Zellen mit einer Sannungsmeßeinrichtung. Die Spannungsmeßeinrichtung erzeugt ein Ladestromsteuersignal für das Batterieladegerät, das von dem Regelalgorithmus der Spannungsmeßeinrichtung so berechnet wird, daß die Spannung der Zelle mit der jeweils höchsten Klemmenspannung auf der Höhe eines gewünschten Spannungswertes, vorzugsweise dem zum jeweiligen Zeitpunkt gehörenden Spannungsgrenzwert einer vom Batteriehersteller für den verwendeten Zellentyp als optimal empfohlenen Ladekennlinie, geführt und gehalten wird. Vorzugsweise werden mit Hilfe der potentialfreien Nachladeeinrichtung Zellen mit niedrigerer Klemmenspannung während oder nach der Ladung der Gesamtbatterie einzeln oder nacheinander und entsprechend ihrer von der Spannungsmeßeinrichtung ermittelten Ladungsaufnahmefähigkeit nachgeladen.

Fig. 1

Die Erfindung betrifft ein Verfahren zum Laden einer mehrzelligen Batterie unter Verwendung eines Batterieladegerätes und einer eine potentialfreie Nachladeeinrichtung enthaltenden microcontrollergesteuerten Einrichtung zur Analyse des Ladezustandes einer aus mehreren Zellen oder Teilbatterien bestehenden Gesamtbatterie mit Schaltvorrichtungen zum Anschalten wenigstens einer Zelle oder Teilbatterie an wenigstens eine mit einem Diagnoseschaltkreis verbundene Doppelleitung, wobei ein System von mehreren Doppelleitungen entsprechend einem Bruchteil der Gesamtzahl der Batteriezellen oder Teilbatterien der Gesamtbatterie vorgesehen ist, wobei als Schaltvorrichtungen mehrpolige Relais mit der Anzahl an Doppelleitungen entsprechender Anzahl an Schaltkontakten vorgesehen sind, von denen jeder an eine Leitung einer eigenen Doppelleitung angeschlossen ist, wobei die Schaltkontakte aller mehrpoligen Relais einerseits mit den Knotenpunkten der Batteriezellen oder Teilbatterien und andererseits mit den Doppelleitungen so verbunden sind, daß in der Reihenschaltung der Batteriezellen oder Teilbatterien benachbarte Knotenpunkte an abwechselnd unterschiedliche Leitungen einer Doppelleitung angeschlossen sind, wobei jede Doppelleitung an ein aus wenigstens einem Widerstand und einem Kondensator bestehendes RC-Filter angeschlossen ist oder anschaltbar ist, dessen Kondensator über ein zweipoliges Schaltglied an den Eingang einer Spannungsmeßeinrichtung schaltbar ist, nachdem zuvor die über zwei der mehrpoligen Relais an das RC-Filter angeschalteten, der zu messenden Batteriezelle oder Teilbatterie zugehörigen Knotenpunkte wieder von dem RC-Filter abgeschaltet worden sind (DE-41 32 229 A1).

Bei der Ladung und Entladung von mehrzelligen, in Serie geschalteten Batterien weisen die Klemmenspannungen der einzelnen Zellen oder Teilbatterien infolge von unvermeidlichen unterschiedlichen konstruktiven, chemischen und elektrischen Parametern der einzelnen Zellen unterschiedliche Klemmenspannungen auf. Bei der Anwendung herkömmlicher Ladegeräte, die zur Steuerung des Ladevorganges nach bekannten Ladekennlinien (UI-, W- usw.) lediglich die Klemmenspannungen einer großen Zahl der in Reihe geschalteten Zellen heranziehen, kommt es daher im Laufe der Zeit zu einer unerkannten, zunehmend unterschiedlichen Aufladung der Zellen. Dies kann soweit gehen, daß einzelne Zellen umgepolt werden. Besonders problematisch sind hierbei hermetisch geschlossene Zellen, da diese zum Erhalt des Elektrolyten die genaue Einhaltung einer maximalen Ladespannung erfordern /14/.

Weiter ist es bei Ausfall einer Batterie schwierig und zeitaufwendig, die defekte Batterie aufzufinden. Ebenso ist eine Klärung der Ausfallursache nicht elementar möglich.

Ein zusätzliches Problem tritt auf, wenn einzelne Zellen durch neue, mit eventuell im Verhältnis zu den verbliebenen Zellen stark abweichenden Parametern, ausgetauscht werden. Dieser Effekt tritt bekannterweise bei Pb-Gel-Zellen auf, deren Anfangskapazität nur etwa 70 % des Endwertes beträgt, und die diese Endkapazität erst nach 20 bis 50 Zyklen erreichen. Diese Zellen können mit herkömmlichen Ladegeräten nicht angemessen geladen werden, so daß der Hersteller gezwungen ist, sogenannte vorzyklierte Zellen oder Teilbatterien bereitzustellen.

Die Erfindung berührt zwei Problemkreise, nämlich die Messung, Diagnose oder Analyse von Batterien, insbesondere die Ermittlung der momentanen Kapazität und die gezielte Nachladung ausgewählter Zellen oder Teilbatterien.

Es sind eine Reihe von Verfahren bekannt, die aus dem Klemmenverhalten der gesamten Batterie auf den Ladezustand schließen /1/, /2/, /3/.

In /4/ ist eine Anordnung beschrieben, die sich auf die Kapazitätsmessung einer aus in Reihe geschalteten Einzelelementen bestehenden Batterie bezieht. Dabei wird die gesamte Batterie mit einem Entladewiderstand belastet. Mittels eines Sequenzers werden dann zyklisch alle Elemente adressiert, und es werden die Klemmenspannungen aller Elemente nacheinander einem Komparator zugeführt. Außerdem wird die Entladezeit überwacht. Bei Unterschreitung eines Schwellwertes der Klemmenspannung eines Elements wird der zyklische Meßvorgang unterbrochen.

Bezugspotential für die Messung jeder Zellenspannung ist Massepotential, so daß die Genauigkeit bei diesem Verfahren mit steigender Elementeanzahl stark abnimmt. Weiterhin ist eine quantitative Angabe der Kapazität unmöglich- lediglich ein Schwellwert wird überwacht. Eine Nachladung einzelner Zellen während der Gesamtladung ist mit dieser Anordnung nicht möglich.

Bei der Schaltung nach /5/ wird der Verdrahtungsaufwand bei der Messung einer Vielzahl von Einzelelementen dadurch verringert, daß jede Zelle oder Gruppe von Zellen mit einer Meßschaltung verbunden ist, die über eine gemeinsame Steuerleitung und/oder Meßleitung ausgelöst wird, wobei diese Werte nacheinander über eine gemeinsame Meßleitung einer gemeinsamen Auswerteeinrichtung zugeführt werden.

Das in /6/ beschriebene Batterieladesystem enthält einen Mikroprozessor und einen oder mehrere Sensoren zur Erfassung und Weiterverarbeitung der elektrischen Signale, um daraus Ausgangssignale zu gewinnen, die zur Ladungssteuerung und Anzeige verwendet werden können.

Die rechnergesteuerte Anordnung nach /7/ dient zum Laden einer Vielzahl von Batterien, die verschiedenen Typs sein können und elektrisch nicht in Reihe geschaltet sind. Es wird zunächst der Typ und die Anfangsladung jeder Batterie bestimmt, und es werden dann die Batterien nacheinander in umgekehrter Reihenfolge ihrer Anfangsladung geladen.

Die Anwendungen /8/ bis /13/ stellen zum Teil sehr aufwendige Lösungen dar, gehen aber sämtlich von der Klemmenspannung der Gesamtbatterie aus.

In /15/ wird ein Ladeverfahren angegeben, das mit Hilfe eines Mikroprozessors die Ladung und Messung mehrerer Batterien gestattet.

Ferner sind noch bekannt:

- Automatisch gesteuertes Mikroprozessor-Batterieprüfgerät BAT-CAT der Firma ANPICO. Dieses Gerät dient ausschließlich zur Batteriediagnose. Hierbei werden die Zellenspannungen über eine Vielzahl von Analogeingängen (Meßeinschüben) mit hoher Auflösung (12Bit) eingelesen.
- Batterielade und Controllsystem (BL + CS) der Firma "Hildebrand Industrie Electronic" in Dietlikon (CH). Bei diesem Gerät werden die einzelnen Zellen oder Teilbatterien über zweipolige Relais mit einem prozessorgesteuerten Meß- und Ladegerät verbunden, wobei je Zelle ein Relais vorhanden ist.

Der Erfindung liegt die Aufgabe zugrunde, ein Verfahren zum Laden einer mehrzelligen Batterie der oben genannten Art zu schaffen, mit dem die Überladung einzelner Zellen der Batterie mit Sicherheit vermieden werden kann, so daß die Batterie insgesamt geschont wird und somit deren Lebensdauer verlängert wird.

Dies wird erfindungsgemäß durch die kennzeichnenden Merkmale des Patentanspruchs 1 erreicht.

Eine weitere Ausgestaltung der Erfindung ergibt sich aus dem Unteranspruch.

Die Erfindung ist im folgenden anhand der Zeichnung an einem Ausführungsbeispiel näher erläutert. In der Zeichnung zeigen:

Fig.1 Schematisch den schaltungsmäßigen Aufbau einer Einrichtung nach dem Hauptpatent,

Fig.2 eine genauere Darstellung der Zusammenschaltung der einzelnen Komponenten der Schaltung nach Fig.1 und

Fig.3 ein spezielles Ausführungsbeispiel der Einrichtung zur Durchführung des erfindungsgemäßen Verfahrens.

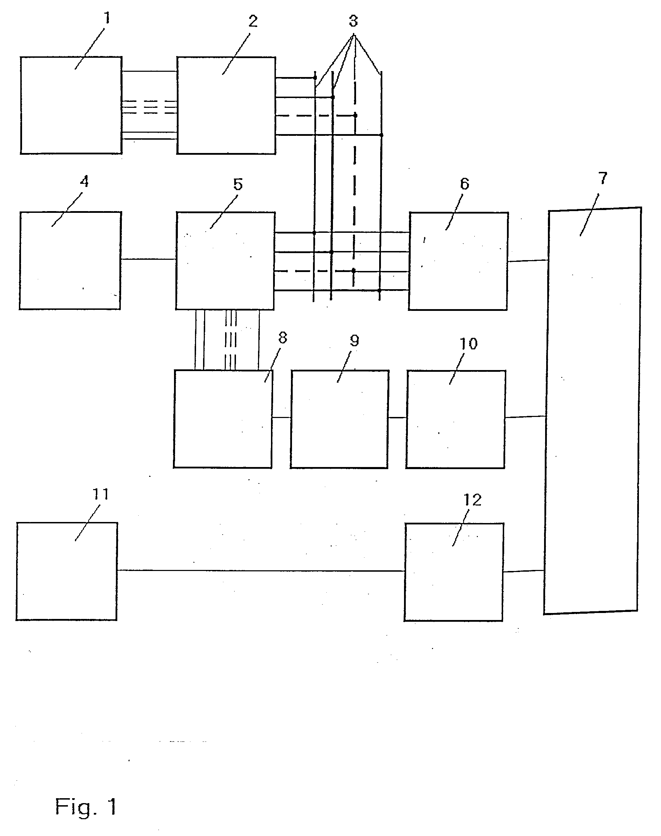

Die Einrichtung nach Fig.1 enthält einen Microcontroller 7 mit binären Ein/Ausgängen und analogen Eingängen, ein erstes Selektionsnetzwerk 2, mit welchem alle zu betrachtenden Knotenpunkte der in Reihe geschalteten Einzelzellen oder Teilbatterien einer Batterie 1 mit einem System von Doppelleitungen 3 schaltbar verbunden werden können. Jede der Leitungen des Systems von Doppelleitungen 3 ist mit je einem Eingang eines Überwachungsnetzwerkes 6 verbunden, dessen Ausgang mit einem Analogeingang des Microcontrollers 7 verbunden ist. Das System von Doppelleitungen 3 ist ferner mit einem zweiten Selektionsnetzwerk 5 verbunden, in welchem eine der Doppelleitungen 3 mit einer potentialfreien Nachladeeinrichtung 4 schaltbar verbunden werden kann, und in welchem das System von Doppelleitungen mit einem zweiten Selektionsnetzwerk 5 zusammengeschaltet werden kann, das mindestens zwei Ausgangsleitungen besitzt, die mit den Eingängen einer aus mindestens einem RC-Filter bestehenden Filterbaugruppe 8 verbunden sind. In einem dritten Selektionsnetzwerk 9 kann eines der RC-Filter der Filtergruppe 8 mit dem Eingang einer Spannungsmeßeinrichtung 10 zusammengeschaltet sein, deren Ausgang mit einem Analogeingang des Microcontrollers 7 verbunden ist.

Die Lade- und Entlade- und ggf. Rekuperationsströme werden mittels einer Stromerfassung 11, die je einen Meßshunt für den Ladestrom und den Entlade-/Rekuperationsstrom enthält, einer Strommeßeinrichtung 12 zugeführt, deren Ausgänge mit den Analogeingängen des Microcontrollers verbunden sind. Die Meßshunts sind je mit einer Klemme mit dem Minuspol der Batterie 1 und einem gemeinsamen Meßeingang (Nullpunkt) der Meßeinrichtung 12 verbunden. Die Strommeßeinrichtung 12 enthält für die Messung des Entlade/Rekuperationsstromes einen invertierenden Operationsverstärker, dessen negative Versorgungsspannung mit dem Nullpunkt der Meßeingänge bzw. dem Minuspol der Batterie 1 verbunden ist und dessen beide Eingänge mit dem Shunt 11 galvanisch verbunden sind. Die Ausgänge beider Verstärker sind mit je einem Analogeingang des Microcontrollers 7 verbunden.

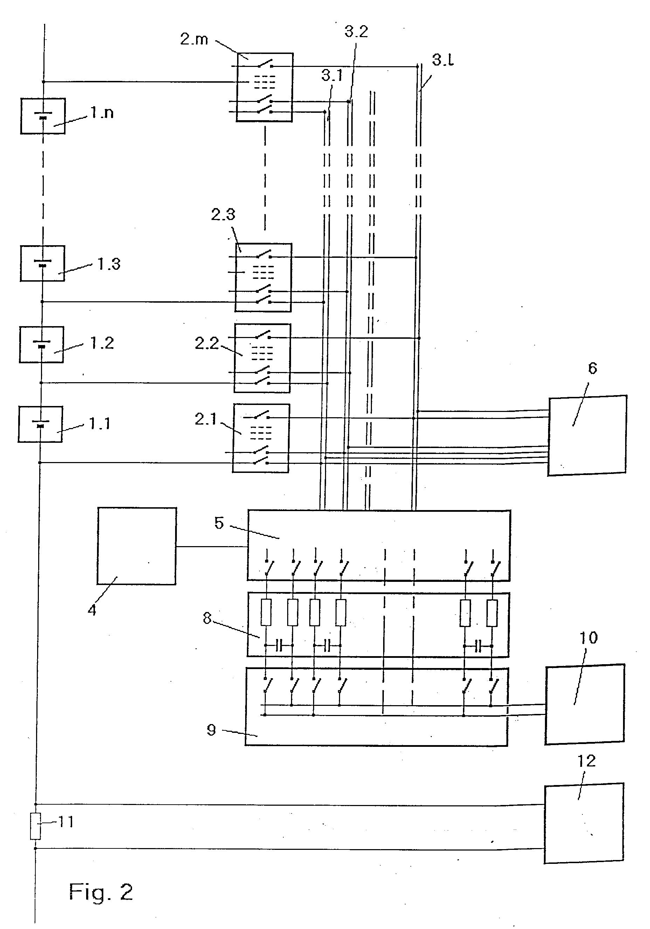

Eine Präzisierung der Art und Weise der Zusammenschaltung der einzelnen Komponenten erfolgt anhand der Fig.2. Die n zu messenden oder nachzuladenden Zellen oder Teilbatterien 1.1 bis 1.n können mit Hilfe eines aus m untereinander gleichartigen, mehrpoligen Relais 2.1 bis 2.m mit geradzahliger Anzahl l von Arbeitskontakten bestehenden ersten Selektionsnetzwerkes 2 dergestalt mit einem in seiner Anzahl mit der Kontaktanzahl der Relais 2 übereinstimmenden System von Doppelleitungen 3.1 bis 3.l schaltbar verbunden werden, daß je eine Doppelleitung 3 einem Bereich aufeinanderfolgender Zellen oder Teilbatterien zugeordnet ist, wobei aufeinanderfolgende Batterieknotenpunkte von in ihren Ordnungsnummern aufeinanderfolgenden Relais 2 abwechselnd mit je einer der beiden Leitungen der dem jeweiligen Batteriebereich zugeordneten Doppelleitungen zusammengeschaltet werden können.

Die Potentiale aller Doppelleitungen 3 werden in einer aus einem Diodennetzwerk mit gemeinsamer Kathode und einem Spannungsteiler bestehenden Überwachungsnetzwerk 6 zu einem Leitungszustandssignal verdichtet, mit dessen Hilfe der Microcontroller das höchste Potential innerhalb sämtlicher Leitungen der Doppelleitungen 3 erkennen und verarbeiten kann.

Im zweiten Selektionsnetzwerk 5 kann jeweils eine der Doppelleitungen 3 mit einer potentialfreien Energiequelle zur Nachladung derart schaltbar verbunden werden, daß die mit Hilfe zweier benachbarter Relais 2 angesprochene Zelle oder Teilbatterie 1.x polrichtig mit der Nachladeeinrichtung 4 verbunden ist. Die Energieversorgung für die Nachladeeinrichtung 4 kann aus einer externen Quelle oder vorzugsweise mit Hilfe eines DC-DC-Wandlers mit Potentialtrennung aus der Batterie 1 erfolgen.

Das zweite Selektionsnetzwerk 5 ist außerdem mit einer aus mindestens einem und höchstens aus einer der Anzahl der Doppelleitungen 3 entsprechenden Anzahl von RC-Gliedern 8 verbunden, so daß jeweils mindestens ein Kondensator mit mindestens einer der im zweiten Selektionsnetzwerk 5 ausgewählten Doppelleitungen zusammengeschaltet werden kann. In einem Schaltwerk 9 wird jeweils einer der Kondensatoren ausgewählt und einer für die Verarbeitung von Eingangsspannungen beider Polarität ausgestatteten Spannungsmeßeinrichtung 10 zugeführt, in welcher eine im Schaltwerk 9 ausgewählte Kondensatorspannung für die Messung durch den Mikrorechner aufbereitet wird.

Bei Anwendung der beschriebenen Anordnung beträgt die Anzahl der notwendigen Relais im ersten Selektionsnetzwerk lediglich n DIVK + 1, wenn n die Zellen- oder Teilbatterieanzahl ist und K die Kontaktzahl der Relais 2 angibt. Weiterhin werden die gleichen Relais 2 sowohl für die Messung, als auch für die Nachladung verwendet.

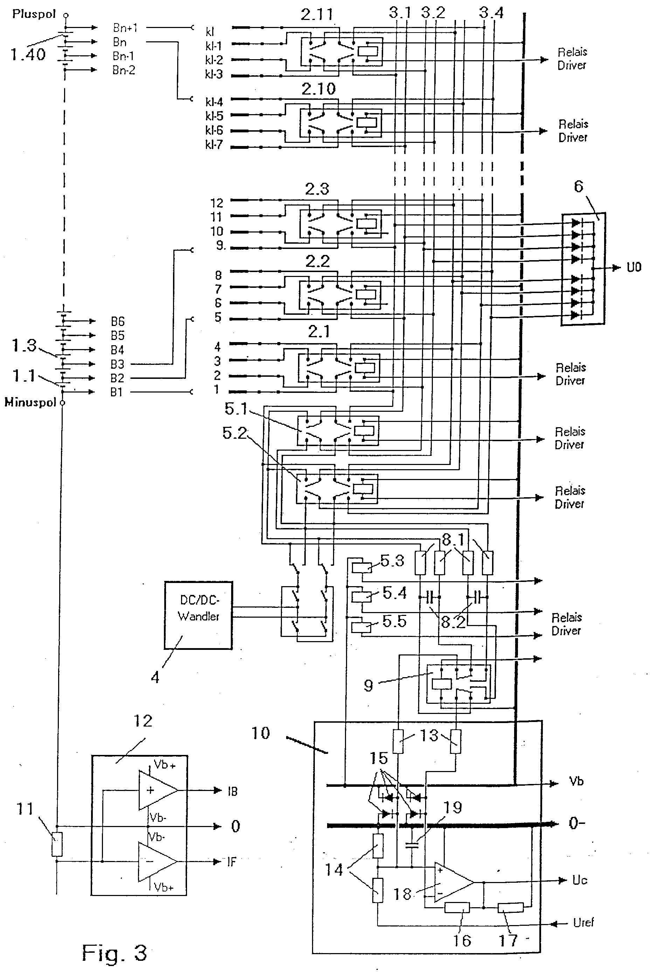

In Fig.3 ist die Schaltunganordnung eines speziellen Ausführungsbeispiels dargetsellt, das für die Analyse und die Nachladung von maximal 40 Zellen oder Teilbatterien vorgesehen ist. Wenn k Eingangsklemmen des aus Relais mit je vier Arbeitskontakten bestehenden Selektionsnetzwerkes 2 in der dargestellten Weise fortlaufend durchnummeriert werden und n die Anzahl der tatsächlich vorhandenen Zellen oder Teilbatterien angibt, so ist die Anschlußzuordnung zwischen der i-ten Minuspolklemme einer Zelle oder Teilbatterie und der j-ten Eingangsklemme des ersten Selektionsnetzwerkes 2 durch die Beziehung

$$i = 1 + (((j\text{-}1)MOD4) * d) + ((j\text{-}1)DIV4) \qquad (1)$$

gegeben, wobei für d gilt:

$$d = (n + 3)DIV4 \qquad (2)$$

Die Anzahl der mindestens benötigten Relais beträgt d + 1. Der Batterieklemmenindex i = n + 1 gehört zur negativen Klemme der nicht vorhandenen n + ersten Zelle oder Teilbatterie und bezeichnet die positive Klemme der n-ten Zelle oder Teilbatterie.

Das zweite Selektionsnetzwerk 5 besteht aus zwei vierpoligen Relais 5.1 und 5.2, die so geschaltet sind, daß aus den vier Doppelleitungen 3.1 bis 3.4 zwei ausgewählt werden können. Die Relais 5.3 bis 5.5 gestatten die polrichtige Anschaltung der Nachladeeinrichtung 4 an eine der mit den Relais 5.1 oder 5.2 ausgewählten Doppelleitungen.

Die Filterbaugruppe 8 enthält für jede dieser zwei Doppelleitungen ein RC-Filter mit untereinander gleichen Widerständen 8.1 und den Kondensatoren 8.2. Das dritte Selektionsnetzwerk 9 besteht lediglich aus einem Relais mit zwei Wechselkontakten. Die Spannungsmeßvorrichtung 10 enthält zwei gleiche Strombegrenzungswiderstände 13, vier Begrenzungsdioden 15 mit kleinem Leckstrom, zwei Symmetrierwiderstände 14, einen Filterkondensator 19, einen Operationsverstärker 18, einen Rückkoplungswiderstand 16 und einen Erdungswiderstand 17. Einer der in Reihe geschalteten Symmetrierwiderstände 14 ist mit einer für die Funktion des ADC erforderlichen, hier jedoch nicht näher betrachteten Referenzspannung Uref verbunden, und es ist die Ausgangsspannung Uc mit einem Analogeingang des Microcontrollers 7 verbunden.

Die Gesamtfunktion der Einrichtung kann entsprechend der weiter oben angegebenen Zielstellung in die folgenden Komponenten gegliedert werden :

1. Zyklisch fortwährende Analyse des Ladezustandes der einzelnen Zellen oder Teilbatterien,

2. bedarfsgerechtes Nachladen einzelner Zellen oder Teilbatterien,

3. Schutz- und Überwachungsfunktionen mit Strommessung,

4. Bedienung und Anzeige/Ausgabe von wählbaren Analyseergebnissen.

Für die vorliegende Erfindung sind dabei zwei Grundoperationen von besonderem Interesse. Diese werden im folgenden beschrieben:

- Messung der Klemmenspannung der selektierten Zelle oder Teilbatterie,
- Nachladung einer ausgewählten Zelle.

Vorraussetzung für beide Operationen ist die beschriebene Einrichtung zur Selektion einer Zelle oder Teilbatterie.

## Messung einer Teilspannung

Zunächst sind alle Relais entregt. Dann wird Relais 9 durch den Microcontroller so angesteuert, daß der für die anschließende Spannungsmessung nicht interessierende Kondensator 8.2 mit dem Eingang der Spannungsmeßeinrichtung 10 verbunden ist. Danach werden zwei benachbarte Relais 2.i, 2.-(i + 1) und eines der Relais 5.1 bis 5.2 so vom Microcontroller angesteuert, daß der nicht mit dem Eingang der Spannungsmeßeinrichtung 10 verbundene Kondensator 8.2 mit der zu messenden Zelle oder Teilbatterie verbunden ist. Dieser aktuelle Meßkondensator lädt sich über die Strombegrenzungswiderstände 8.1 auf den Wert der zu messenden Klemmenspannung unverfälscht auf, da er nicht über die Eingangswiderstände 13 mit dem Eingang derSpannungsmeßeinrichtung 10 verbunden ist. Somit kann beim anschließenden - technisch real nicht zeitsynchronen - Öffnen der Kontakte des Relais 5.1 oder 5.2 auch kurzzeitig kein einer möglichen, relativ hohen Gleichtaktspannung entsprechender Fehlerstrom über die Widerstände 13 zu einer Ladungsverschiebung im aktuellen Meßkondensator 8.2 führen.

Nach dem controllergesteuerten Öffnen der Kontakte von Relais 5.1 oder 5.2 wird Relais 9 umgeschaltet, so daß der aktuelle Meßkondensator mit dem Eingang der Spannungsmeßeinrichtung 10 verbunden ist und nach Ablauf einer durch die Zeitkonstante R14/2-C19 der Slew-Rate des Operations = verstärkers 19 und einer, möglicherweise infolge hoher Gleichtaktspannung an den Widerständen 13 unmittelbar zuvor verursachten Übersteuerung des Operationsverstärkers bestimmten Übergangszeit am Ausgang Uc eine der zu messenden Zellen- oder Teilbatteriespannung entsprechende Ausgangsspannung zum Einlesen durch den Microcontroller zur Verfügung steht.

## Nachladen einer Zelle oder Teilbatterie

Zunächst sind alle Relais entregt. Dann wird mit den Relais 2, 5.1 oder 5.2 und dem Relais 5.3 ein solcher Strompfad geschaffen, daß die Wechselkontakte von Relais 5.3 mit der nachzuladenden Zelle oder Teilbatterie verbunden sind. Bis zu diesem Zeitpunkt schalten alle Relais im stromlosen Zustand. Dann wird entsprechend der Polarität das Relais 5.4 oder 5.5 zugeschaltet, wodurch der Ausgang der Nachladeeinrichtung 4 mit der adressierten Zelle oder Teilbatterie verbunden ist. Wenn die Strom- oder Spannungsquelle der Nachladeeinrichtung 4 nicht vom Microcontroller auftastbar ist, so schaltet Relais 5.4 bzw. 5.5 den Ladestrom ein, bei elektronischer Auftastung des Batterieladegerätesg schaltet Relais 5.4 bzw. 5.5 stets lastfrei. Die Abschaltung des Ladestromes erfolgt in umgekehrter Reihenfolge, so daß in jedem Falle nur Relais 5.4 oder 5.5 unter Last schaltet.

Die Spannungsmeßeinrichtung 10 erzeugt ein Ladestromsteuersignal für die Nachladeeinrichtung 4. Dieses Ladestromsteuersignal wird von dem Regelalgorithmus der Spannungsmeßeinrichtung 10 so berechnet, daß die Spannung der Zelle mit der jeweils höchsten Klemmenspannung auf der Höhe eines gewünschten Spannungswertes, vorzugsweise auf dem zum jeweiligen Zeitpunkt gehörenden Spannungsgrenzwert einer vom Batteriehersteller für den verwendeten Zellentyp als optimal empfohlenen Ladekennlinie, geführt und gehalten wird.

## Schutz und Überwachung

Um sicherzustellen, daß es bei dem relativ komplizierten Ablauf und der Vielzahl von beteiligten Relaiskontakten zu keiner Havarie und insbesondere zu keinen Kurzschlußschaltungen kommen kann, wird erfindungsgemäß so vorgegangen, daß sämtliche Leitungen der Doppelleitungen 3 in einer Überwachungsbaugruppe 7 zu einem Analogwert verdichtet werden, der vom Microcontroller gelesen werden kann. Das Bezugspotential des Microcontrollers (Groundpotential für Analogmessung) für diese Messung ist der Minuspol der Batterie. In dieser Baugruppe wird jede der Doppelleitungen mit je einer Anode einer hochsperrenden Diode verbunden, deren Kathoden parallel geschaltet und mit dem Eingang eines Spannungsteilers verbunden sind, an dessem Ausgang die als Analogwert UO vorliegende Leitungs = zustandsinformation vom Microcontroller eingelesen werden kann. Mit dieser Anordnung ist jeweils das höchste positive Potential auf den Doppelleitungen 3 erfaßbar. Die Überwachungsbaugruppe kann auch aus einem Widerstandsnetzwerk bestehen, wodurch bei Verwendung von Präzisionswiderständen ein Leitungszustandssignal mit höherem Informationsgehalt bereitsteht.

Vor jedem Zuschalten eines beliebigen Relais der Baugruppe 3 kann somit vom Microcontroller geprüft werden, ob die Spannungspegel auf den Leitungen den Erwartungen entsprechen, so daß bei Abweichungen eine Information über das vermutlich defekte Relais ausgegeben werden kann.

## Strommessung

Wird der Shunt 11 vom Entlade- oder Rekuperationsstrom durchflossen, so entsteht an seiner mit dem Meßeingang verbundenen Klemme gegenüber dem Minuspol der Batterie bzw. dem Nullpunkt des Strom = meßsystems 12 eine je nach Stromrichtung gepolte Spannung. Je einer der mit dem Shunt verbundenen Operationsverstärker wird dadurch entweder übersteuert oder liefert an seinem Ausgang eine dem Strom proportionale Spannung. Da beide Verstärkerausgänge IB und IF dem Microcontroller 7 zugeführt werden, kann dieser erkennen, in welcher Richtung der Strom fließt und welche Größe er hat.

Bei dem Erfindungsgemäßen Verfahren werden zunächst die Klemmenspanungen aller Batteriezellen gemessen, und es wird diejenige Batteriezelle mit höchster Klemmenspannung ermittelt. Daraufhin wird die Gesamtbatterie mit dem vom Batteriehersteller als optimal empfohlenen Ladestromverlauf für eine Einzelzelle mit diesem Ladestromverlauf für die Zelle mit höchster Klemmenspannung geladen.

Dadurch wird sichergestellt, daß keine Batteriezelle in ungünstiger Weise überladen wird.

Da bei diesem Ladeverfahren die anderen Batteriezellen u.U. nicht voll geladen werden, können diese Batteriezellen einzeln während oder nach der Hauptladung mit Hilfe der Nachladeeinrichtung 4 unter Ausschluß der Batteriezelle mit höchster Klemmenspannung nachgeladen werden.

Vorzugsweise werden mit Hilfe der potentialfreien Nachladeeinrichtung 4 die mit Hilfe des zweiten Selektionsnetzwerkes 5 mit jeweils einer der Doppelleitungen schaltbar verbunden wersen kann, Zellen mit niedrigerer Klemmenspannung während oder nach der Ladung der Gesamtbatterie einzeln oder nacheinander und entsprechend ihrer von der Spannungsmeßeinrichtung 10 ermittelten Ladungsaufnahmefähigkeit nachgeladen.

**Literatur:**

/1/ Windebank Robert W.: Method and apparatus for testing a battery. **EP G 01 R 31/36,** Publ.-No: 0 067 589

/2/ Möhrstedt, Udo: Verfahren und Vorrichtung zur Messung des Ladezustandes einer Batterie. **EP G 01 R 31/36,** Publ.-No: 0 071 816

/3/ Lefebvre, Jean-Paul: Procédé et dispositif de mesure de lètat de charge d'un générateur électochimique en fonctionnement. **EP G 01 G 31/36,** Publ.-No: 0 090 699

/4/ Vandenberghe, Claude: Dispositif de contrôle de la capacité d'une batterie d'éléments d'accumulateur. **EP G 01 R 31/36,** Publ.-No: 0 112 242

/5/ Geuer, Wolfgang: Schaltung zur laufenden Überprüfung der Qualität einer mehrzelligen Batterie. **EP G 01 R 31/36,** Publ.-No: 0 277 321

/6/ Lemelson, Jerome Hal: Rechargeable electric battery system and method. **EP H 02 J 7/00,** Publ.-No: 0 074 444

/7/ Bauer, George W.: A battery charging system. **EP H 02 J 7/00,** Publ.-No: 0 314 155

/8/ Windebank, Robert W.: Method and apparatus for charging a battery. **EP H 02 J 7/04,** Publ.-No: 0 067 590

/9/ Taylor, Andrew John: Improvements in or relating to battery charging. **EP H 02 J 7/04,** Publ.-No: 0 121 325

/10/ Belot, Pierre: Procédé et dispositif de suivi de l'état de charge d'un accumulateur. **EP H 02 J 7/10,** Publ.-No: 0 012 315

/11/ Martin, Ray John: Controller for battery charger. **EP H 02 J 7/10,** Publ.-No: 0 181 112

/12/ Hutchings, Philip D.: A universal charging system and method. **EP H 02 J 7/10,** Publ.-No: 0 293 664

/13/ Hauser, Franz: Verfahren zum Laden und gleichzeitigen Prüfen des Zustandes eines Nikkelcadmium-Akkumulators. **EP H 02 J 7/10,** Publ.-No: 0 336 381

/14/ Miltenberger, Gerhard: Verfahren zum Laden von Bleiakkumulatoren. **EP H 02 J 7/10,** Publ.-No: 0 339 446

/15/ Smilanich, Nicholas Joseph: Battery chargers. **EP H 02 J 7/10,** Publ.-No: 0 361 859

**Patentansprüche**

1. Verfahren zum Laden einer mehrzelligen Batterie unter Verwendung eines Batterieladegerätes und einer eine potentialfreie Nachladeeinrichtung enthaltenden microcontroller-gesteuerten Einrichtung zur Analyse des Ladezustandes einer aus mehreren Teilbatterien bestehenden Gesamtbatterie mit Schaltvorrichtungen zum Anschalten wenigstens einer Teilbatterie an wenigstens eine mit einem Diagnoseschaltkreis verbundene Doppelleitung, wobei ein System von mehreren Doppelleitungen entsprechend einem Bruchteil der Gesamtzahl der Batteriezellen oder Teilbatterien der Gesamtbatterie vorgesehen ist, wobei als Schaltvorrichtungen mehrpolige Relais mit der Anzahl an Doppelleitungen entsprechender Anzahl an Schaltkontakten vorgesehen sind, von denen jeder an eine Leitung einer eigenen Doppelleitung angeschlossen ist, wobei die Schaltkontakte aller mehrpoligen Relais einerseits mit den Knotenpunkten der Batteriezellen oder Teilbatterien und andererseits mit den Doppelleitungen so verbunden sind, daß in der Reihenschaltung der Batteriezellen oder Teilbatterien benachbarte Knotenpunkte an abwechselnd unterschiedliche Leitungen einer Doppelleitung angeschlossen sind, wobei jede Doppelleitung an ein aus wenigstens einem Widerstand und einem Kondensator bestehendes RC-Filter angeschlossen ist oder anschaltbar ist, dessen Kondensator über ein zweipoliges Schaltglied an den Eingang einer Spannungsmeßeinrichtung schaltbar ist, nachdem zuvor die über zwei der mehrpoligen Relais an das RC-Filter angeschalteten, der zu messenden Batteriezelle oder Teilbatterie zugehörigen Knotenpunkte wieder von dem RC-Filter abgeschaltet worden sind,

**dadurch gekennzeichnet, daß**

die Spannungsmeßeinrichtung ein Ladestromsteuersignal für das Batterieladegerät erzeugt, das von dem Regelalgorithmus der Spannungsmeßeinrichtung so berechnet wird, daß die Spannung der Zelle mit der jeweils höchsten Klemmenspannung auf Höhe eines gewünschten Spannungswertes, vorzugsweise dem zum jeweiligen Zeitpunkt gehörenden Spannungsgrenzwert einer vom Batteriehersteller für den verwendeten Zellentyp als optimal empfohlenen Ladekennlinie, geführt und gehalten wird.

2.  Verfahren nach Anspruch 1, **dadurch gekennzeichnet, daß** mit Hilfe der potentialfreien Nachladeeinrichtung, das in dem zweiten Selektionsnetzwerk mit jeweils einer der Doppelleitungen schaltbar verbunden werden kann, Zellen mit niedrigerer Klemmenspannung während oder nach der Ladung der Gesamtbatterie einzeln oder nacheinander und entsprechend ihrer von der Spannungsmeßeinrichtung ermittelten Ladungsaufnahmefähigkeit nachgeladen werden.

Fig. 1

Fig. 2

Fig. 3